# EUROPEAN PATENT SPECIFICATION

(11) **EP 3 944 162 B1**
(45) Date of publication and mention of the grant of the patent: **03.09.2025**
(21) Application number: 21183652.3
(22) Date of filing: 05.07.2021
(51) Int. Cl.: G06Q 10/20, G06Q 50/40, G06Q 10/0639, G06F 16/683, G07C 5/08, B62D 5/04, B62D 15/02, G07C 5/00

(54) **METHOD AND SYSTEM OF MANAGING A VEHICLE ABNORMALITY OF A FLEET VEHICLE**
VERFAHREN UND SYSTEM ZUR VERWALTUNG EINER FAHRZEUGANOMALIE EINES FLOTTENFAHRZEUGS
PROCÉDÉ ET SYSTÈME DE GESTION D'UNE ANOMALIE DE VÉHICULE D'UNE FLOTTE DE VÉHICULES

(30) Priority: 23.07.2020 US 202063055502 P; 31.03.2021 US 202117218402
(43) Date of publication of application: 26.01.2022
(73) Proprietor: Denso Corporation, Aichi 448-8661 (JP)
(72) Inventor: KANDASAMY, Nandhinee, Southfield, 48086 (US); NESPOLO, Martin, Southfield, 48086 (US); MAHMOUD, Mustafa, Southfield, 48086 (US)
(74) Representative: TBK

(56) References cited:
- WO-A1-2019/213177
- US-A1- 2017 358 151
- US-A1- 2019 325 290
- US-B1- 10 223 842

## Description

The present disclosure relates to a method and system for managing an abnormality of a vehicle that is part of a vehicle fleet.

Vehicle-sharing fleet managers may have a variety of vehicles that are available to rent for a predefined period of time using a vehicle-sharing application. Users of the vehicles are typically relied upon to report any vehicle abnormalities such as damage and/or performance issues to the vehicle-sharing fleet managers.

However, if a vehicle is returned with unnoticed or unreported abnormalities, it can be difficult to assess when the abnormality occurred and to identify the user assigned to the vehicle at the time the abnormality occurred.

The document US 2017/358151 A1 discloses a method for autonomously monitoring the health of a vehicle, that comprises receiving at least one from among vibration data of the vehicle and noise data of the vehicle, wherein the vibration data comprises measurements of vibration experienced by one or more components of the vehicle and the noise data comprises measurements of sound pressure levels associated with the vehicle, accessing at least one from among predetermined vibration performance data of the vehicle and predetermined noise performance data of the vehicle, determining a difference in the received vibration data and the predetermined vibration performance data, and transmitting a notification of a condition of the vehicle in response to the difference surpassing a predetermined vibration performance threshold or the difference surpassing a predetermined noise performance threshold. Further prior art is known from WO 2019/213177 A1, US 10 223 842 B1 and US 2019/325290 A1.

It is an object of the present invention to provide an improved method and system for managing an abnormality of a vehicle that is part of a vehicle fleet. According to the invention, this object is achieved by a method according to claim 1 and a system according to claim 14. Further features and advantageous modifications are shown in the dependent claims.

In one form, the present disclosure is directed toward a method for managing a vehicle abnormality of a vehicle part of a vehicle fleet. The method includes detecting, by a vehicle controller, a vehicle abnormality based on data from one or more sensors and a diagnostic model. The data is indicative of a steering wheel state, a vehicle wheel state, or a combination thereof. Additionally, the vehicle abnormality includes a vehicle wheel misalignment. The method further includes transmitting, by the vehicle controller, a notification to a fleet management system in response to the vehicle abnormality, where the notification includes information indicative of a vehicle identification of the vehicle, the vehicle abnormality, or a combination thereof. In addition, the method includes associating, by the fleet management system, the vehicle abnormality with an assigned user record based on the information from the notification.

In still another variation, the method further includes identifying, by the fleet management system, the assigned user record from among a plurality of user records managed by the fleet management system based on the vehicle identification. In one form, the assigned user record provides information related to an assigned user of the vehicle when the vehicle abnormality was detected.

In yet another variation, the method further includes determining a repair cost associated with the vehicle abnormality, determining whether the assigned user is at least partially responsible for the vehicle abnormality, and allocating at least a portion of the repair cost to the assigned user associated with the vehicle abnormality in response to the assigned user being at least partially responsible.

In one variation, the method further includes performing a vehicle state check after the vehicle is returned to verify the vehicle wheel misalignment. **In** one form, the repair cost is determined in response to vehicle wheel misalignment being verified.

In another variation, the method further includes notifying, by the fleet management system, the assigned user of the vehicle abnormality.

In yet another variation, the method further includes notifying, by the vehicle controller, passengers of the vehicle of the vehicle abnormality in response to the vehicle abnormality being detected.

In still another variation, the notification further includes a vehicle location, a timestamp of the vehicle abnormality, or a combination thereof.

In one variation, associating the vehicle abnormality with the assigned user record further includes storing, by the fleet management system, information indicative of the vehicle abnormality with the assigned user record.

In one variation, the steering wheel state includes a steering wheel direction, a steering wheel vibration, a steering wheel noise, a steering column vibration, a steering column noise, or a combination thereof.

In another variation, the vehicle wheel state includes a vehicle wheel vibration, a vehicle wheel direction, a vehicle wheel noise, or a combination thereof.

In another variation, the data from the one or more sensors includes an acoustic signal from a microphone disposed at the vehicle, the one or more sensors includes the microphone, and the vehicle abnormality is detected based on the acoustic signal and the diagnostic model. In one form, the diagnostic model is configured to associate one or abnormalities with a defined signal profile.

In yet another variation, the vehicle abnormality further includes a vehicle collision, a brake wear, an abnormal powertrain operation, a vehicle body damage, or a combination thereof.

In one variation, the method further includes determining, by the vehicle controller, whether a vehicle passenger identifies an abnormal sound in the vehicle based on the acoustic signal and the natural language model, and flagging the acoustic signal for further analysis to determine the vehicle abnormality.

According to the invention, the one or more sensors includes one or more cameras. In addition, detecting the vehicle abnormality further includes determining, by the vehicle controller, a direction of vehicle wheels of the vehicle based on image data from the one or more cameras. The vehicle wheel state includes direction of the vehicle wheels. In one form, the method of this variation also includes determining, by the vehicle controller, the vehicle wheel misalignment, as the vehicle abnormality, when the direction of the vehicle wheels does not correlate with the steering wheel state.

In one form, the present disclosure is directed towards a system for managing vehicle abnormalities of a vehicle from a plurality of vehicles forming a fleet. The system includes a datastore storing a plurality of assigned user records, where each of the assigned user records includes information related to an assigned user that employs the vehicle from the fleet. The system further includes a controller communicatively coupled to the fleet. The controller is configured to identify, in response to receiving a notification from a subject vehicle from the fleet, a related assigned user record from among the plurality of assigned user records based on information in the notification. The information of the notification is indicative of a vehicle identification of the vehicle, the vehicle abnormality, or a combination thereof. In addition, the controller is configured to associate the vehicle abnormality of the subject vehicle with the related assigned user record, wherein the vehicle abnormality includes a vehicle wheel misalignment. The system further includes a vehicle controller disposed at the vehicle and configured to detect a vehicle abnormality based on data from one or more sensors of the vehicle and a diagnostic model. The data is indicative of a steering wheel state, a vehicle wheel state, or a combination thereof, and the vehicle abnormality includes a vehicle wheel misalignment. The vehicle controller is further configured to transmit the notification in response to the vehicle abnormality being detected, where the notification includes information indicative of a vehicle identification of the vehicle, the vehicle abnormality, or a combination thereof.

In a variation, the vehicle controller is further configured to issue a notification regarding the vehicle abnormality via a user interface of the vehicle.

In yet another variation, the controller is further configured to provide a notification regarding the vehicle abnormality to the assigned user of the vehicle abnormality.

In on variation, to associate the vehicle abnormality with the assigned user record, the controller is further configured to store information indicative of the vehicle abnormality with the assigned user record.

In one form, the present disclosure is directed towards a method of detecting vehicle abnormalities of a vehicle. The method includes detecting, by a vehicle controller, a vehicle wheel misalignment based on data from one or more sensors and a diagnostic model. The data is indicative of a steering wheel state, a vehicle wheel state, or a combination thereof. The method further includes transmitting, by the vehicle controller, a notification to a fleet management system in response to the vehicle wheel misalignment being detected. The notification includes a vehicle identification of the vehicle, data related to the vehicle wheel misalignment, or a combination thereof. In addition, the method includes identifying, by the fleet management system, an assigned user record from among a plurality of user records managed by the fleet management system based on the vehicle identification; and associating, by the fleet management system, the vehicle wheel misalignment with the assigned user record.

Further areas of applicability will become apparent from the description provided herein. It should be understood that the description and specific examples are intended for purposes of illustration only and are not intended to limit the scope of the present disclosure.

Additional objects and advantages of the present disclosure will be more readily apparent from the following detailed description when taken together with the accompanying drawings. In the drawings:
FIG. 1 illustrates a roadway having a vehicle of a fleet management system in accordance with the teachings of the present disclosure;
FIG. 2 is a block diagram of a vehicle having a vehicle controller in accordance with the teachings of the present disclosure;
FIG. 3 is a block diagram of a fleet management system in accordance with the teachings of the present disclosure;
FIG. 4 is a flowchart of a vehicle abnormality routine in accordance with the teachings of the present disclosure; and
FIG. 5 is a flowchart of an abnormality processing routine in accordance with the teachings of the present disclosure.

The following description is merely exemplary in nature and is not intended to limit the present disclosure, application, or uses. It should be understood that throughout the drawings, corresponding reference numerals indicate like or corresponding parts and features.

The present disclosure provides for a method and/or system that detects and processes vehicle abnormalities while a vehicle of a vehicle fleet is being used by a user. More particularly, the vehicle is configured to detect the occurrence of a vehicle abnormality, such as wheel misalignment, based on data from sensors disposed at the vehicle. Once detected, the vehicle transmits a notification regarding the abnormality to a fleet management (FM) system that manages the vehicle fleet. The FM system processes the notification to associate the abnormality with the user or more particularly, a record associated with the user (i.e., an assigned user record). Accordingly, the FM system is able to track abnormalities as they occur and does not have to rely on the user to report the abnormality. These and other features of the vehicle and fleet management system of the present disclosure are described in detail herein.

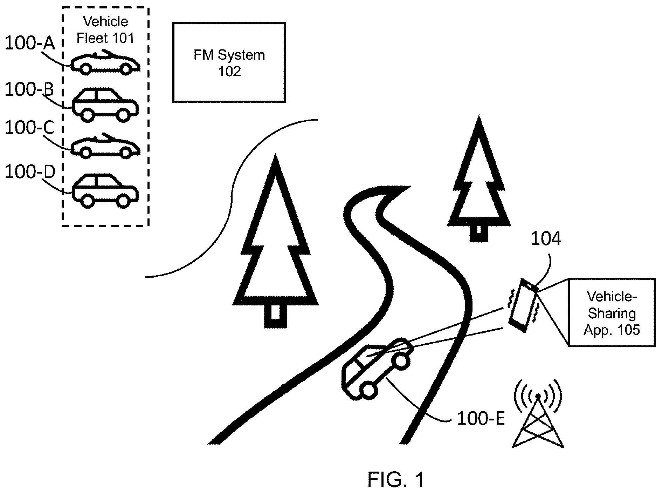

Referring to FIG. 1, in a vehicle-sharing system, a user is able to rent a vehicle 100 from a vehicle fleet 101 managed by a fleet management (FM) system 102, where the vehicle fleet 101 includes multiple vehicles 100-A to 100-E (collectively "vehicle 100"). In one form, the user accesses the vehicle fleet 101 via a client device 104 having a vehicle-sharing application (app.) 105. The client device 104 may be a computer, a laptop, a smartphone, a tablet, a personal digital assistant (PDA), a wearable device, among other types of computing devices. In one form, the FM system 102, the vehicle 100 of the vehicle fleet 101, and the client device 104 are configured to communicate with each other via one or more communication network using one or more wireless communication protocols (e.g., a Bluetooth^{®}-type protocol, a cellular protocol, a wireless fidelity (Wi-Fi)-type protocol, a near-field communication (NFC) protocol, an ultra-wideband (UWB) protocol, among others). With the vehicle-sharing application 105, the user enters account information (e.g., username, contact information, and/or payment method) and rental selection (e.g., type of vehicle to be rented, duration of rental, and/or travel information for the selected vehicle). In addition, the FM system 102 is configured to provide information to the user, such as but not limited to: invoices, vehicle health reports, and/or abnormality notification.

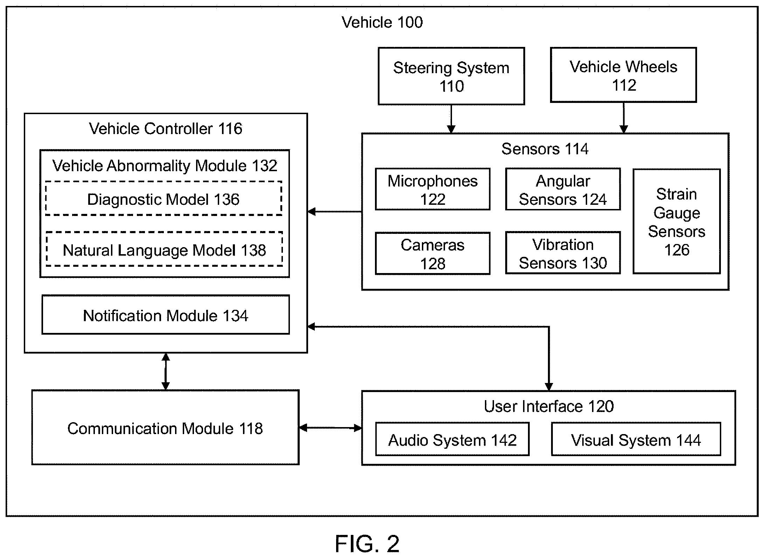

The vehicle 100 is configured to support and provide vehicle-to-device (V2X) communication which incorporates vehicle-to-infrastructure communication and vehicle-to-vehicle, among others. Referring to FIG. 2, in one form, the vehicle 100 is configured to include a steering system 110, vehicle wheels 112, one or more vehicle sensors 114, a vehicle controller 116, a communication module 118 and a user interface 120. The steering system 110, which is part of a chassis system of the vehicle 100, includes components which allows the vehicle 100 to control a directional movement of the vehicle 100. Among other components, the steering system 110 may include a steering wheel, a steering column, and a power assist steering system coupled to one or more of the wheels 112. In one form, the steering system 110 is configured to convert a rotational movement of the steering wheel by the user into a turning movement of the one or more wheels. In some variations, the vehicle 100 may be a partial or fully autonomous vehicles, and thus, the steering system 110 is controlled by the vehicle controller 116.

The sensors 114 are configured to generate data indicative of a steering wheel state, a vehicle wheel state, or a combination thereof. The steering wheel state includes a steering wheel direction, a steering wheel vibration, a steering wheel noise, a steering column vibration, and/or a steering column noise. The vehicle wheel state includes a vehicle wheel vibration, a vehicle wheel direction, and/or a vehicle wheel noise. In one form, the sensors 114 include one or more microphones 122, one or more angular sensors 124, one or more strain gauge sensors 126, one or more cameras 128, and/or one or more vibration sensors 130. While specific sensors are provided, the vehicle 100 is not required to include all of the sensors 114 described herein and other types of sensors may be employed.

In one form, the microphones 122 are located throughout the vehicle 100 and are configured to detect sounds and generate an acoustic signal indicative of the sound detected. As described further herein, the acoustic signal is then analyzed by the vehicle controller 116 to detect potential abnormalities. For example, the acoustic signal may indicate an abnormal noise in the steering wheel, the vehicle wheels, and/or a crash. The angular sensors 124 are provided with the steering system 110 to measure an angular position of one or more elements of the steering system 110, such as the steering wheel. The strain gauge sensors 126 are configured to measure resistance in the steering system 110, such as the steering wheel or the vehicle wheels 112. In one form, the cameras 128 are positioned to capture image of the exterior of the vehicle including the vehicle wheels 112. Based on the images, the vehicle controller 116 determines a vehicle abnormality such as wheel misalignment and damage to the vehicle. The vibration sensors 130 are arranged to measure a vibration frequency of the steering system 110 and/or the vehicle wheels 112.

Among other modules, the vehicle controller 116 is configured to include a vehicle abnormality module 132 and a notification module 134. In one form, the vehicle abnormality module 132 is configured to detect a vehicle abnormality, such as a wheel misalignment, based on data from the sensors 114. The notification module 134 is configured to transmit a notification to the FM system 102 in response to the vehicle abnormality being detected.

In one form, the vehicle abnormality module 132 is configured to determine whether a vehicle abnormality has occurred using at least one of a diagnostic model 136 and a natural language model 138. In one form, the diagnostic model 136 is an artificial intelligence trained model that processes the data from the sensors 114 to determine if there is a vehicle abnormality and specifically, a wheel misalignment. In another example, the diagnostic model 136 may be a series of algorithms provided as software programs that process the data to determine if there is an abnormality.

The natural language model 138 is configured to analyze acoustic signals from microphones disposed in the passenger compartment of the vehicle 100 to determine whether a vehicle passenger identifies an abnormal sound in the vehicle 100. In one form, the natural language model 138 is provided using known natural language processing techniques to identify one or more text inputs provided in the acoustic signal, where the text inputs are associated with a vehicle abnormality such as but not limited to: "what is that noise", "strange noise", "what is that sound", "do you feel that vibration", etc. Once the text inputs are identified, the natural language model 138 is configured to flag the acoustic signal for further analysis to determine if a vehicle abnormality exists. For example, the natural language model may confer with the diagnostic model 136 to determine if a vehicle abnormality was detected.

The vehicle abnormality module 132 may be configured in various suitable ways to detect vehicle abnormalities, and more specifically wheel misalignment. The following are just a few non-limiting examples. In one form, once detected, the vehicle abnormality module 132 may issue diagnostic trouble codes associated with the wheel misalignment (i.e., the vehicle abnormality).

In one example, the vehicle abnormality module 132, and more particularly, the diagnostic model 136, is configured to analyze images from the cameras 128 to determine wheel direction for the vehicle wheels and determine if the wheel direction correlate to a steering wheel angle/direction. For example, if the steering wheel is directed right, but the wheels are straight, the vehicle abnormality module 132 determines that the vehicle wheels are misaligned.

In another example, the diagnostic model 136 is configured to analyze acoustic signals to detect a vehicle abnormality by comparing the acoustic signal to abnormal signal profiles associated with various abnormalities including wheel misalignment. The diagnostic model 136 is configured filter noise and known profiles from the acoustic signal and then compare the processed acoustic signal to the abnormal signal profiles. If there is substantial correlation, the vehicle abnormality module 132 having the diagnostic model 136 determines that a vehicle abnormality occurred and specifically, the abnormality associated with correlated abnormal signal profile.

In yet another example, the vehicle abnormality module 132 analyzes vibration signals to detect vehicle abnormality. Specifically, in one form, the diagnostic model 136 analyzes vibration signals associated with the steering wheel and/or the vehicle wheels to determine if the vehicle wheels are misaligned. The vibration signals can be compared to threshold signal profiles. If the vibration signals exceed the threshold signal profiles, the diagnostic model 136 determines the occurrence of a wheel misalignment.

In response to a vehicle abnormality being detected, the notification module 134 is configured to generate a notification message (i.e., a notification) to be provided to the FM system 102 to log and process the abnormality. In one form, the notification message includes, but is not limited to: a vehicle location, a timestamp of the vehicle abnormality, and/or delivery of the message; data related to the vehicle abnormality (e.g., a diagnostic trouble code); vehicle identification (ID); or a combination thereof. In one form, the notification module 134 is further configured to notify a passenger of the vehicle abnormality via the user interface 120.

In one form, the communication module 118 is configured to support V2X communication to have the vehicle 100 exchange information with external devices such as the FM system 102, and thus, may include one or more transceivers, radio circuits, amplifiers, modulation circuits, among others devices. Accordingly, the communication module 118 is configured transmit the notification message to the FM system 102 and also process messages received from other devices such as the FM system 102.

The user interface 120 is configured to provide information and receive commands from a passenger of the vehicle 100. The user interface 120 is typically provided within a passenger cabin of the vehicle 100 and, in one form, includes an audio system 142 and visual system 144. The audio system 142 includes speakers and a microphone 122, and the visual system 144 includes a monitor with a touchscreen. The user interface 120 can be employed to notify the passenger of a detected vehicle abnormality. For example, a message may be displayed by the visual system 144 and/or an audio message may be broadcasted via the audio system 142.

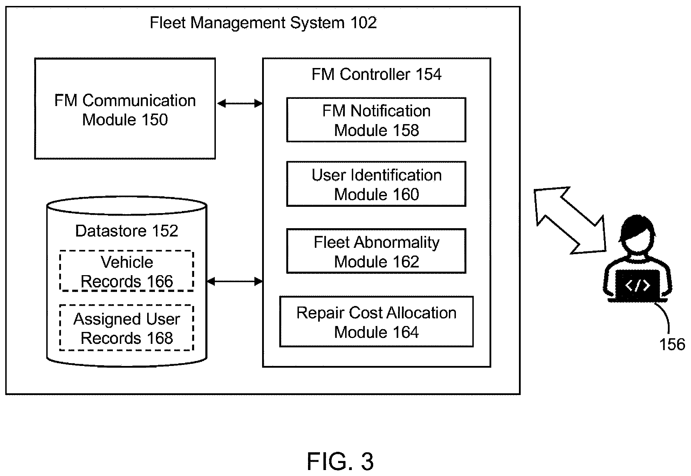

Referring to FIG. 3, an example block diagram of the FM system 102 is provided. The FM system 102 is configured to track the use of its vehicle fleet 101 including vehicle abnormalities detected by the vehicles 100. In one form, a FM representative, such as a booking agent or maintenance technician, may access the information provided in the FM system via a FM interface accessible by a computing device 156. For example, a maintenance technician may access vehicle health information for a particular vehicle 100 via the FM interface. In one form, the FM interface is a web-based network for providing access to FM representatives located at different locations.

In one form, the FM system 102 includes a FM communication module 150, a datastore 152, and a FM controller 154. The FM system 102 is configured to communicate with it's the vehicles 100 of the vehicle fleet 101 which includes the vehicle 100 via the FM communication module 150. Accordingly, the FM communication module 150 may include one or more transceivers, radio circuits, amplifiers, modulation circuits, among devices for communicating with various devices.

The datastore 152 is configured as a repository for storing and managing data such as, but not limited to: vehicle records 166 and assigned user records. The vehicle records 166 provide information related to each vehicle 100 of the vehicle fleet 101. The information provided in the vehicle records 166 include, but is not limited to: vehicle ID, make, model, registration information, location information, and vehicle health information (e.g., milage, routine maintenance schedule, and/or vehicle abnormality history). The vehicle records 166 may also include a user log providing information related to the user that rented the vehicle 100, such as an assigned user ID, a check-out date, and a check-in date.

The assigned user records 168 provides information regarding users that check-out a vehicle 100 from the vehicle fleet 101. The assigned user record includes: an assigned user ID that is unique to the user (e.g., alpha-numeric character string), a username, contact information for the user (e.g., phone number, address, electronic mail address), payment information, insurance information, and/or copy of an official ID (e.g., driver license). The assigned user record may further include information related to the vehicle 100 being used by the user, such as but not limited to: a vehicle ID; check-out information providing when the vehicle 100 was checked-out to the user and when the vehicle 100 is to be checked-in; and/or vehicle incident information detailing a vehicle abnormality detected when the user was assigned the vehicle. The assigned user record may also include invoice information such as rental fees and/or repair fees.

The FM controller 154 is configured to process notification messages from the vehicle 100 to determine the assigned user of the vehicle 100 and possible repair cost associated with the vehicle abnormality provided in the notification message. In one form, the FM controller 154 includes a FM notification module 158, a user identification module 160, a fleet abnormality module 162, and a repair cost allocation (RCA) module 164.

The FM notification module 158 is configured process the notification message to extract the vehicle identification and information related to the vehicle abnormality, such as the type of vehicle abnormality and associated diagnostic trouble codes. The FM notification module 158 is also configured to generate an assigned user notification to notify an assigned user of the vehicle abnormality and if applicable a repair cost associated with the vehicle abnormality.

The user identification module 160 is configured to identify an assigned user record from among the plurality of user records based on the vehicle ID. For example, based on the vehicle ID, the user identification module 160 searches the datastore 152 for the vehicle record 166 associated with the vehicle ID and the assigned user record having the vehicle ID as the vehicle 100 currently being employed by the user.

The fleet abnormality module 162 is configured to associate the vehicle abnormality with the assigned user record. For example, the fleet abnormality module 162 stores information related to the vehicle abnormality in the assigned user record, such as the vehicle ID, the type of abnormality, and/or the date of the abnormality. In one form, the fleet abnormality module 162 is also configured to verify the vehicle abnormality identified in the notification message. For example, the fleet abnormality module 162 is configured to request a vehicle state check from a FM maintenance representative once the vehicle 100 has been returned to determine if there is a wheel misalignment. If the vehicle abnormality is not confirmed, the fleet abnormality module 162 is configured to remove the vehicle abnormality from the assigned user record for the user. If the vehicle abnormality is confirmed, the fleet abnormality module 162 is further configured to determine if the assigned user associated with the wheel misalignment should pay for the repair (e.g., a portion or full amount). For example, in addition to confirmation of the wheel misalignment, the FM maintenance representative may provide information indicating whether the abnormality is caused by general wear of the vehicle 100 or by evasive driving by the assigned user. The fleet abnormality module 162 may also review the vehicle health record of the vehicle 100 to determine if the cause of the wheel misalignment is partly related to the assigned user.

In the event the assigned user is to pay for at least a portion of the repairs, the RCA module 164 is configured to determine a repair cost associated with the vehicle abnormality and an amount to be allocated to the user. Various method may be used for estimating and allocating cost. For example, the RCA module 162 may employ one or more repair cost tables that provides repair costs for various vehicle abnormalities such as, the wheel misalignment. The amount to be allocated can by determined based on various factors such as the vehicle health, recommendation by the FM maintenance representative, whether the assigned user is associated with other vehicle abnormalities (i.e., driver history for the assigned user). The RCA module 162 may be configured to process these factors using an allocation model defined by historical data and machine learning to determine the amount or a percent allocation to be billed to the assigned user.

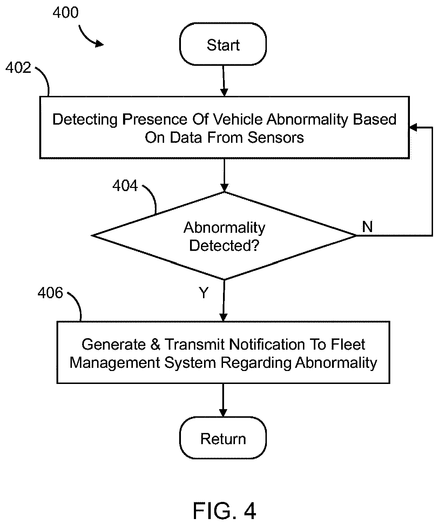

Referring to FIG. 4, an example vehicle abnormality routine 400 for detecting and managing vehicle abnormalities by the vehicle controller 116 of the vehicle 100 is provided. At 402, the vehicle controller 116 detects presence of a vehicle abnormality, such as a wheel misalignment, based on data from one or more sensors. At 404, the vehicle controller 116 determines whether an abnormality is detected. If yes, the vehicle controller 116 generates and transmits a notification to the FM system 102, at 406.

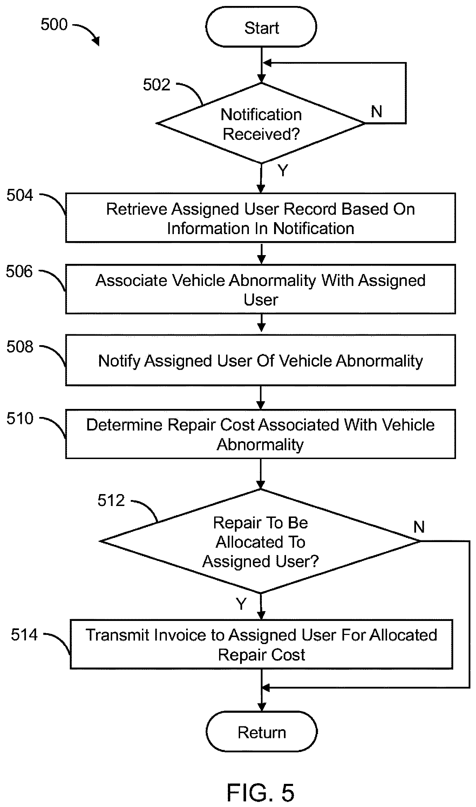

Referring to FIG. 5, an example abnormality processing routine 500 performed by the FM system 102 is provided. At 502, the FM system 102 determines whether a notification regarding a vehicle abnormality is received from a vehicle 100 of the vehicle fleet. If so, the FM system 102 retrieves the assigned user record based on information in the notification, at 504. At 506, the FM system 102 associates the vehicle abnormality to the assigned user record and at 508, the FM system 102 notifies the assigned user of the vehicle abnormality. At 510, the FM system 102 determines a repair cost associated with the vehicle abnormality and, at 512, determines whether to allocate a portion of the repair cost to the assigned user. If yes, the FM system 102 transmits an invoice to the assigned user, at 514.

It should be readily understood that the routines 400 and 500 are just examples and that the vehicle controller 116 and FM system 102 can be configured in various suitable ways. For example, after detecting the vehicle abnormality, the vehicle controller 116 may notify passengers in the vehicle of the abnormality. In another example, if the assigned user is not allocated any repair cost, the FM system 102 may amend the assigned user record to remove the association of the vehicle abnormality. In another variation, the FM system 102 may not perform a repair cost analysis.

Unless otherwise expressly indicated herein, all numerical values indicating mechanical/thermal properties, compositional percentages, dimensions and/or tolerances, or other characteristics are to be understood as modified by the word "about" or "approximately" in describing the scope of the present disclosure. This modification is desired for various reasons including industrial practice, material, manufacturing, and assembly tolerances, and testing capability.

As used herein, the phrase at least one of A, B, and C should be construed to mean a logical (A OR B OR C), using a non-exclusive logical OR, and should not be construed to mean "at least one of A, at least one of B, and at least one of C."

In this application, the term "controller" and/or "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components (e.g., op amp circuit integrator as part of the heat flux data module) that provide the described functionality; or a combination of some or all of the above, such as in a system-on-chip.

The term memory is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory, tangible computer-readable medium are nonvolatile memory circuits (such as a flash memory circuit, an erasable programmable read-only memory circuit, or a mask read-only circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general-purpose computer to execute one or more particular functions embodied in computer programs. The functional blocks, flowchart components, and other elements described above serve as software specifications, which can be translated into the computer programs by the routine work of a skilled technician or programmer.

The description of the disclosure is merely exemplary in nature.

A method includes detecting, by a vehicle controller (116), a vehicle abnormality based on data from one or more sensors (114) and a diagnostic model (136). The data is indicative of a steering wheel state, a vehicle wheel state, or a combination thereof such that the vehicle abnormality includes a vehicle wheel misalignment. The method further includes transmitting, by the vehicle controller (116), a notification to a fleet management system (102) in response to the vehicle abnormality being detected. The notification includes information indicative of a vehicle identification of the vehicle, the vehicle abnormality, or a combination thereof. Additionally, the method further includes associating, by the fleet management system (102), the vehicle abnormality with an assigned user record based on the information from the notification.

## Claims

1. A method of managing a vehicle abnormality of a vehicle part (100-A, 100-B, 100-C, 100-D, 100-E) of a vehicle fleet (101), the method comprising:
detecting, by a vehicle controller (116), a vehicle abnormality based on data from one or more sensors (114) and a diagnostic model (136), wherein the data is indicative of a steering wheel state, a vehicle wheel state, or a combination thereof, wherein
the vehicle abnormality includes a vehicle wheel misalignment;
the one or more sensors (114) includes one or more cameras (128) configured to determine, by the vehicle controller (116), a direction of vehicle wheels of the vehicle based on image data from the one or more cameras (128), wherein the vehicle wheel state includes direction of the vehicle wheels;
the one or more sensors (114) includes angular sensors (124) provided with a steering system (110), configured to measure an angular position of a steering wheel as the steering wheel state; and
the vehicle wheel misalignment is determined by the vehicle controller (116) as the vehicle abnormality, when the direction of the vehicle wheels based on the image data does not correlate with the steering wheel state based on the angular position of the steering wheel;
transmitting, by the vehicle controller (116), a notification to a fleet management system (102) in response to the vehicle abnormality being detected, wherein the notification includes information indicative of a vehicle identification of the vehicle, the vehicle abnormality, or a combination thereof; and
associating, by the fleet management system (102), the vehicle abnormality with an assigned user record based on the information from the notification.

2. The method according Claim 1 further comprising
identifying, by the fleet management system (102), the assigned user record from among a plurality of user records managed by the fleet management system (102) based on the vehicle identification,
wherein the assigned user record provides information related to an assigned user of the vehicle when the vehicle abnormality was detected.

3. The method according to Claim 2 further comprising:
determining a repair cost associated with the vehicle abnormality;
determining whether the assigned user is at least partially responsible for the vehicle abnormality; and
allocating at least a portion of the repair cost to the assigned user associated with the vehicle abnormality in response to the assigned user being at least partially responsible.

4. The method according to Claim 3 further comprising
performing a vehicle state check after the vehicle is returned to verify the vehicle wheel misalignment,
wherein the repair cost is determined in response to the vehicle wheel misalignment being verified.

5. The method according to Claim 2 further comprising
notifying, by the fleet management system (102), the assigned user of the vehicle abnormality.

6. The method according to Claim 1 further comprising
notifying, by the vehicle controller (116), passengers of the vehicle of the vehicle abnormality in response to the vehicle abnormality being detected.

7. The method according to Claim 1 wherein,
the notification further includes a vehicle location, a timestamp of the vehicle abnormality, or a combination thereof.

8. The method according to Claim 1, wherein
associating the vehicle abnormality with the assigned user record further comprises storing, by the fleet management system (102), information indicative of the vehicle abnormality with the assigned user record.

9. The method according to Claim 1, wherein
the steering wheel state further includes a steering wheel vibration, a steering wheel noise, a steering column vibration, a steering column noise, or a combination thereof.

10. The method according to Claim 1, wherein
the vehicle wheel state includes a vehicle wheel vibration, a vehicle wheel direction, a vehicle wheel noise, or a combination thereof.

11. The method according to Claim 1, wherein:
the data from the one or more sensors (114) includes an acoustic signal from a microphone (122) disposed at the vehicle, the one or more sensors (114) includes the microphone (122); and
the vehicle abnormality is detected based on the acoustic signal and the diagnostic model (136), wherein the diagnostic model (136) is configured to associate one or abnormalities with a defined signal profile.

12. The method according to Claim 11, wherein
the vehicle abnormality further includes a vehicle collision, a brake wear, an abnormal powertrain operation, a vehicle body damage, or a combination thereof.

13. The method according to Claim 11 further comprising:
determining, by the vehicle controller (116), whether a vehicle passenger identifies an abnormal sound in the vehicle based on the acoustic signal and a natural language model (138); and
flagging the acoustic signal for further analysis to determine the vehicle abnormality.

14. A system for managing vehicle abnormalities of a vehicle from a plurality of vehicles (100-A, 100-B, 100-C, 100-D, 100-E) forming a fleet (101), the system comprising:
a datastore (152) storing a plurality of assigned user records, wherein each of the assigned user records includes information related to an assigned user that employs the vehicle (100-A, 100-B, 100-C, 100-D, 100-E) from the fleet (101);
a vehicle controller (116) disposed at the vehicle, wherein the vehicle controller (116) is configured to:
detect a vehicle abnormality based on data from one or more sensors (114) of the vehicle and a diagnostic model (136), wherein the data is indicative of a steering wheel state, a vehicle wheel state, or a combination thereof, wherein
the vehicle abnormality includes the vehicle wheel misalignment;
the one or more sensors (114) includes one or more cameras (128) configured to determine, by the vehicle controller (116), a direction of vehicle wheels of the vehicle based on image data from the one or more cameras (128), wherein the vehicle wheel state includes direction of the vehicle wheels;
the one or more sensors (114) includes angular sensors (124) provided with a steering system (110), configured to measure an angular position of a steering wheel as the steering wheel state; and
the vehicle wheel misalignment is determined by the vehicle controller (116) as the vehicle abnormality, when the direction of the vehicle wheels based on the image data does not correlate with the steering wheel state based on the angular position of the steering wheel; and
to transmit the notification in response to the vehicle abnormality being detected, wherein the notification includes information indicative of the vehicle identification of the vehicle, the vehicle abnormality, or a combination thereof; and
a controller (154) communicatively coupled to the fleet (101), wherein the controller is configured to:
identify, in response to receiving a notification from a subject vehicle from the fleet (101), a related assigned user record from among the plurality of assigned user records based on information in the notification, wherein the information of the notification includes a vehicle identification of the vehicle, the vehicle abnormality, or a combination thereof; and
associate the vehicle abnormality of the subject vehicle with the related assigned user record, wherein the vehicle abnormality includes a vehicle wheel misalignment.

15. The system of Claim 14, wherein
the vehicle controller (116) is further configured to issue a notification regarding the vehicle abnormality via a user interface (120) of the vehicle.

16. The system of Claim 14, wherein
the controller (154) is further configured to provide a notification regarding the vehicle abnormality to the assigned user of the vehicle abnormality.

17. The system of Claim 14, wherein
to associate the vehicle abnormality with the assigned user record, the controller (154) is further configured to store information indicative of the vehicle abnormality with the assigned user record.

## Patentansprüche

1. Verfahren zum Verwalten einer Fahrzeugabnormität eines Fahrzeugteils (100-A, 100-B, 100-C, 100-D, 100-E) einer Fahrzeugflotte (101), wobei das Verfahren aufweist:
Erfassen einer Fahrzeugabnormität durch eine Fahrzeugsteuerung (116) basierend auf Daten von einem oder mehreren Sensoren (114) und einem Diagnosemodell (136), wobei die Daten einen Lenkradzustand, einen Fahrzeugradzustand oder eine Kombination davon anzeigen, wobei
die Fahrzeugabnormität eine Fahrzeugradfehlausrichtung umfasst;
der eine oder die mehreren Sensoren (114) eine oder mehrere Kameras (128) umfassen, die konfiguriert sind, um durch die Fahrzeugsteuerung (116) eine Richtung von Fahrzeugrädern des Fahrzeugs basierend auf Bilddaten von der einen oder den mehreren Kameras (128) zu bestimmen, wobei der Fahrzeugradzustand die Richtung der Fahrzeugräder umfasst;
die eine oder die mehreren Sensoren (114) Winkelsensoren (124) umfassen, die in einem Lenksystem (110) bereitgestellt sind, die konfiguriert sind, um eine Winkelposition eines Lenkrads als den Lenkradzustand zu messen; und
die Fahrzeugradfehlausrichtung von der Fahrzeugsteuerung (116) als Fahrzeugabnormität bestimmt wird, wenn die Richtung der Fahrzeugräder basierend auf den Bilddaten nicht mit dem Lenkradzustand basierend auf der Winkelposition des Lenkrads korreliert;
Senden einer Benachrichtigung durch die Fahrzeugsteuerung (116) an ein Flottenmanagementsystem (102) als Reaktion auf das Erfassen der Fahrzeugabnormität, wobei die Benachrichtigung Informationen umfasst, die eine Fahrzeugidentifikation des Fahrzeugs, die Fahrzeugabnormität oder eine Kombination davon angeben; und
Zuordnen der Fahrzeugabnormität durch das Flottenmanagementsystem (102) zu einem zugewiesenen Benutzerdatensatz basierend auf den Informationen aus der Benachrichtigung.

2. Verfahren gemäß Anspruch 1, weiterhin mit
Identifizieren des zugewiesenen Benutzerdatensatzes durch das Flottenmanagementsystem (102) aus einer Vielzahl von Benutzerdatensätzen, die vom Flottenmanagementsystem (102) basierend auf der Fahrzeugidentifikation verwaltet werden,
wobei der zugewiesene Benutzerdatensatz Informationen bereitstellt, die sich auf einen zugewiesenen Benutzer des Fahrzeugs beziehen, als die Fahrzeugabnormität erfasst wurde.

3. Verfahren gemäß Anspruch 2, weiterhin mit:
Bestimmen von Reparaturkosten, die mit der Fahrzeugabnormität verbunden sind;
Bestimmen, ob der zugewiesene Benutzer zumindest teilweise für die Fahrzeugabnormität verantwortlich ist; und
Zuweisen zumindest eines Teils der Reparaturkosten an den zugewiesenen Benutzer, der mit der Fahrzeugabnormität verbunden ist, als Reaktion darauf, dass der zugewiesene Benutzer zumindest teilweise verantwortlich ist.

4. Verfahren gemäß Anspruch 3, weiterhin mit
Durchführen einer Fahrzeugzustandsprüfung nach der Rückgabe des Fahrzeugs, um die Fahrzeugradfehlstellung zu überprüfen,
wobei die Reparaturkosten in Reaktion auf die Überprüfung der Fahrzeugradfehlstellung bestimmt werden.

5. Verfahren gemäß Anspruch 2, weiterhin mit
Benachrichtigen des zugewiesenen Benutzers über die Fahrzeugabnormität durch das Flottenmanagementsystem (102).

6. Verfahren gemäß Anspruch 1, weiterhin mit
Benachrichtigen der Insassen des Fahrzeugs durch die Fahrzeugsteuerung (116) über die Fahrzeugabnormität als Reaktion darauf, dass die Fahrzeugabnormität erfasst wurde.

7. Verfahren gemäß Anspruch 1, wobei
die Benachrichtigung weiterhin einen Fahrzeugstandort, einen Zeitstempel der Fahrzeugabnormität oder eine Kombination davon umfasst.

8. Verfahren gemäß Anspruch 1, wobei
das Zuordnen der Fahrzeugabnormität zu dem zugewiesenen Benutzerdatensatz ferner das Speichern von Informationen, die die Fahrzeugabnormität angeben, durch das Flottenmanagementsystem (102) mit dem zugewiesenen Benutzerdatensatz aufweist.

9. Verfahren gemäß Anspruch 1, wobei
der Lenkradzustand weiterhin eine Lenkradvibration, ein Lenkradgeräusch, eine Lenksäulenvibration, ein Lenksäulengeräusch oder eine Kombination davon umfasst.

10. Verfahren gemäß Anspruch 1, wobei
der Fahrzeugradzustand eine Fahrzeugradvibration, eine Fahrzeugradrichtung, ein Fahrzeugradgeräusch oder eine Kombination davon umfasst.

11. Verfahren gemäß Anspruch 1, wobei
die Daten von dem einen oder den mehreren Sensoren (114) ein akustisches Signal von einem am Fahrzeug angeordneten Mikrofon (122) umfassen, der eine oder die mehreren Sensoren (114) das Mikrofon (122) umfassen; und
die Fahrzeugabnormität basierend auf dem akustischen Signal und dem Diagnosemodell (136) erfasst wird, wobei das Diagnosemodell (136) konfiguriert ist, um eine oder mehrere Abnormitäten einem definierten Signalprofil zuzuordnen.

12. Verfahren gemäß Anspruch 11, wobei
die Fahrzeugabnormität weiterhin eine Fahrzeugkollision, einen Bremsverschleiß, einen abnormen Antriebsstrangbetrieb, einen Fahrzeugkarosserieschaden oder eine Kombination davon umfasst.

13. Verfahren gemäß Anspruch 11, weiterhin mit:
Bestimmen durch die Fahrzeugsteuerung (116), ob ein Fahrzeuginsasse ein abnormes Geräusch im Fahrzeug basierend auf dem akustischen Signal und einem natürlichen Sprachmodell (138) identifiziert; und
Markieren des akustischen Signals für eine weitere Analyse, um die Fahrzeugabnormität zu bestimmen.

14. System zum Verwalten von Fahrzeugabnormitäten eines Fahrzeugs aus einer Vielzahl von Fahrzeugen (100-A, 100-B, 100-C, 100-D, 100-E), die eine Flotte (101) bilden, wobei das System aufweist:
einen Datenspeicher (152), der eine Vielzahl von zugewiesenen Benutzerdatensätzen speichert, wobei jeder der zugewiesenen Benutzerdatensätze Informationen umfasst, die sich auf einen zugewiesenen Benutzer beziehen, der das Fahrzeug (100-A, 100-B, 100-C, 100-D, 100-E) aus der Flotte (101) verwendet;
eine Fahrzeugsteuerung (116), die an dem Fahrzeug angeordnet ist, wobei die Fahrzeugsteuerung (116) konfiguriert ist, um
eine Fahrzeugabnormität basierend auf Daten von einem oder mehreren Sensoren (114) des Fahrzeugs und einem Diagnosemodell (136) zu erfassen, wobei die Daten einen Lenkradzustand, einen Fahrzeugradzustand oder eine Kombination davon anzeigen, wobei
die Fahrzeugabnormität die Fahrzeugradfehlausrichtung umfasst;
die eine oder mehreren Sensoren (114) eine oder mehrere Kameras (128) umfassen, die dazu eingerichtet sind, durch die Fahrzeugsteuerung (116) eine Richtung der Fahrzeugräder des Fahrzeugs basierend auf Bilddaten von der einen oder den mehreren Kameras (128) zu bestimmen, wobei der Fahrzeugradzustand die Richtung der Fahrzeugräder umfasst;
die eine oder die mehreren Sensoren (114) Winkelsensoren (124) umfassen, die in einem Lenksystem (110) bereitgestellt sind, die konfiguriert sind, um eine Winkelposition eines Lenkrads als den Lenkradzustand zu messen; und
die Fahrzeugradfehlausrichtung von der Fahrzeugsteuerung (116) als Fahrzeugabnormität bestimmt wird, wenn die Richtung der Fahrzeugräder basierend auf den Bilddaten nicht mit dem Lenkradzustand basierend auf der Winkelposition des Lenkrads korreliert; und
die Fahrzeugsteuerung (116) eine Benachrichtigung an die Flottensteuerung (101) sendet, um die Benachrichtigung zu senden, wenn die Fahrzeugabnormität erfasst wird, wobei die Benachrichtigung Informationen umfasst, die die Fahrzeugidentifikation des Fahrzeugs, die Fahrzeugabnormität oder eine Kombination davon angeben; und
eine Steuereinheit (154), die mit der Flotte (101) in Kommunikationsverbindung steht, wobei die Steuereinheit konfiguriert ist, um:
als Reaktion auf den Empfang einer Benachrichtigung von einem betreffenden Fahrzeug aus der Flotte (101) einen zugehörigen zugewiesenen Benutzerdatensatz aus der Vielzahl von zugewiesenen Benutzerdatensätzen basierend auf Informationen in der Benachrichtigung zu identifizieren, wobei die Informationen der Benachrichtigung eine Fahrzeugidentifikation des Fahrzeugs, die Fahrzeugabnormität oder eine Kombination davon umfassen; und
die Fahrzeugabnormität des betreffenden Fahrzeugs mit dem zugehörigen zugewiesenen Benutzerdatensatz verknüpft, wobei die Fahrzeugabnormität eine Fahrzeugradfehlstellung umfasst.

15. System gemäß Anspruch 14, wobei
die Fahrzeugsteuerung (116) weiterhin konfiguriert ist, um über eine Benutzerschnittstelle (120) des Fahrzeugs eine Benachrichtigung über die Fahrzeugabnormität auszugeben.

16. Das System gemäß Anspruch 14, wobei
die Steuereinheit (154) weiterhin konfiguriert ist, um eine Benachrichtigung über die Fahrzeugabnormität an den zugewiesenen Benutzer der Fahrzeugabnormität zu senden.

17. System gemäß Anspruch 14, wobei
zum Zuordnen der Fahrzeugabnormität zu dem zugewiesenen Benutzerdatensatz die Steuereinheit (154) weiterhin konfiguriert ist, um Informationen, die die Fahrzeugabnormität angeben, mit dem zugewiesenen Benutzerdatensatz zu speichern.

## Revendications

1. Procédé de gestion d'une anomalie du véhicule d'une partie de véhicule (100-A, 100-B, 100-C, 100-D, 100-E) d'une flotte de véhicules (101), le procédé comprenant :
la détection, par un dispositif de commande de véhicule (116), d'une anomalie du véhicule sur la base de données provenant d'un ou plusieurs capteurs (114) et d'un modèle de diagnostic (136), les données étant indicatives d'un état du volant, d'un état des roues du véhicule ou d'une combinaison de ceux-ci, dans lequel
l'anomalie du véhicule comprend un désalignement des roues du véhicule ;
l'un ou les plusieurs capteurs (114) comprennent une ou plusieurs caméras (128) configurées pour déterminer, par le dispositif de commande de véhicule (116), une direction des roues du véhicule sur la base des données d'image provenant de l'une ou des plusieurs caméras (128), l'état des roues du véhicule comprenant la direction des roues du véhicule ;
l'un ou les plusieurs capteurs (114) comprennent des capteurs angulaires (124) fournis avec un système de direction (110), configurés pour mesurer une position angulaire d'un volant en tant qu'état du volant ; et
le désalignement des roues du véhicule est déterminé par le dispositif de commande de véhicule (116) en tant que l'anomalie du véhicule, lorsque la direction des roues du véhicule basée sur les données d'image n'est pas en corrélation avec l'état du volant basé sur la position angulaire du volant ;
la transmission, par le dispositif de commande de véhicule (116), d'une notification à un système de gestion de flotte (102) en réponse à la détection de l'anomalie du véhicule, la notification comprenant des informations indiquant une identification de véhicule du véhicule, l'anomalie du véhicule, ou une combinaison de ceux-ci ; et
l'association, par le système de gestion de flotte (102), de l'anomalie du véhicule à un dossier de l'utilisateur attribué sur la base des informations provenant de la notification.

2. Procédé selon la revendication 1 comprenant en outre
l'identification, par le système de gestion de flotte (102), du dossier de l'utilisateur attribué parmi une pluralité de dossiers de l'utilisateur gérés par le système de gestion de flotte (102) sur la base de l'identification du véhicule,
dans lequel le dossier de l'utilisateur attribué fournit des informations relatives à un utilisateur attribué du véhicule lorsque l'anomalie du véhicule a été détectée.

3. Procédé selon la revendication 2 comprenant en outre :
la détermination des coûts de réparation associé à l'anomalie du véhicule ;
la détermination si l'utilisateur attribué est au moins partiellement responsable pour l'anomalie du véhicule ; et
la répartition d'au moins une partie des coûts de réparation à l'utilisateur attribué associé à l'anomalie du véhicule en réponse au fait que l'utilisateur attribué est au moins partiellement responsable.

4. Procédé selon la revendication 3 comprenant en outre
l'exécution d'un contrôle de l'état du véhicule après le retour du véhicule afin de vérifier le désalignement des roues du véhicule,
les coûts de réparation sont déterminés en réponse à la vérification du désalignement des roues du véhicule.

5. Procédé selon la revendication 2 comprenant en outre
la notification, par le système de gestion de flotte (102), de l'anomalie du véhicule à l'utilisateur attribué.

6. Procédé selon la revendication 1 comprenant en outre
la notification, par le dispositif de commande de véhicule (116), de l'anomalie du véhicule aux passagers du véhicule en réponse à la détection de l'anomalie du véhicule.

7. Procédé selon la revendication 1, dans lequel
la notification comprend en outre une localisation du véhicule, un horodatage de l'anomalie du véhicule, ou une combinaison de ceux-ci.

8. Procédé selon la revendication 1, dans lequel
l'association de l'anomalie du véhicule au dossier de l'utilisateur attribué comprend en outre le stockage, par le système de gestion de flotte (102), d'informations indiquant l'anomalie du véhicule avec le dossier de l'utilisateur attribué.

9. Procédé selon la revendication 1, dans lequel
l'état du volant comprend en outre une vibration du volant, un bruit du volant, une vibration de la colonne de direction, un bruit de la colonne de direction, ou une combinaison de ceux-ci.

10. Procédé selon la revendication 1, dans lequel
l'état des roues du véhicule comprend une vibration des roues du véhicule, une direction des roues du véhicule, un bruit des roues du véhicule, ou une combinaison de ceux-ci.

11. Procédé selon la revendication 1, dans lequel :
les données provenant de l'un ou des plusieurs capteurs (114) comprennent un signal acoustique provenant d'un microphone (122) disposé au véhicule, l'un ou les plusieurs capteurs (114) comprenant le microphone (122) ; et
l'anomalie du véhicule est détectée sur la base du signal acoustique et du modèle de diagnostic (136), le modèle de diagnostic (136) étant configuré pour associer une ou plusieurs anomalies à un profil de signal défini.

12. Procédé selon la revendication 11, dans lequel
l'anomalie du véhicule comprend en outre une collision du véhicule, une usure des freins, un fonctionnement anormal du groupe motopropulseur, des dommages à la carrosserie du véhicule, ou une combinaison de ceux-ci.

13. Procédé selon la revendication 11 comprenant en outre :
la détermination, par le dispositif de commande de véhicule (116), si un passager du véhicule identifie un son anormal dans le véhicule sur la base du signal acoustique et d'un modèle de langage naturel (138) ; et
le marquage du signal acoustique pour une analyse plus approfondie afin de déterminer l'anomalie du véhicule.

14. Système de gestion des anomalies de véhicule d'un véhicule parmi une pluralité de véhicules (100-A, 100-B, 100-C, 100-D, 100-E) formant une flotte (101), le système comprenant :
un dépôt de données (152) stockant une pluralité de dossiers de l'utilisateur attribué, dans lequel chacun des dossiers de l'utilisateur attribué comprend des informations relatives à un utilisateur attribué qui emploie le véhicule (100-A, 100-B, 100-C, 100-D, 100-E) de la flotte (101) ;
un dispositif de commande de véhicule (116) disposé au véhicule, le dispositif de commande de véhicule (116) étant configuré pour :
détecter une anomalie du véhicule sur la base de données provenant d'un ou plusieurs capteurs (114) du véhicule et d'un modèle de diagnostic (136), les données étant indicatives d'un état du volant, d'un état des roues du véhicule, ou d'une combinaison de ceux-ci, dans lequel
l'anomalie du véhicule comprend le désalignement des roues du véhicule ;
l'un ou les plusieurs capteurs (114) comprennent une ou plusieurs caméras (128) configurées pour déterminer, par le dispositif de commande de véhicule (116), une direction des roues de véhicule du véhicule sur la base des données d'image provenant de l'une ou des plusieurs caméras (128), l'état des roues du véhicule comprenant la direction des roues du véhicule ;
l'un ou les plusieurs capteurs (114) comprennent des capteurs angulaires (124) fournis avec un système de direction (110), configurés pour mesurer une position angulaire d'un volant en tant qu'état du volant ; et
le désalignement des roues du véhicule est déterminé par le dispositif de commande de véhicule (116) en tant que l'anomalie du véhicule, lorsque la direction des roues du véhicule basée sur les données d'image n'est pas en corrélation avec l'état du volant basé sur la position angulaire du volant ; et
transmettre la notification en réponse à la détection de l'anomalie du véhicule, la notification comprenant des informations indiquant l'identification de véhicule du véhicule, l'anomalie du véhicule, ou une combinaison de ceux-ci ; et
un dispositif de commande (154) couplé de manière communicative à la flotte (101), le dispositif de commande étant configuré pour :
identifier, en réponse à la réception d'une notification provenant d'un véhicule concerné de la flotte (101), un dossier de l'utilisateur attribué associé parmi la pluralité de dossiers de l'utilisateur attribué sur la base des informations contenues dans la notification, les informations de la notification comprenant une identification de véhicule du véhicule, l'anomalie du véhicule, ou une combinaison de ceux-ci ; et
associer l'anomalie du véhicule du véhicule concerné au dossier de l'utilisateur attribué associé, l'anomalie du véhicule comprenant un désalignement des roues du véhicule.

15. Système selon la revendication 14, dans lequel
le dispositif de commande de véhicule (116) est en outre configuré pour émettre une notification concernant l'anomalie du véhicule via une interface utilisateur (120) du véhicule.

16. Système selon la revendication 14, dans lequel
le dispositif de commande (154) est en outre configuré pour fournir une notification concernant l'anomalie du véhicule à l'utilisateur attribué de l'anomalie du véhicule.

17. Système selon la revendication 14, dans lequel
pour associer l'anomalie du véhicule au dossier de l'utilisateur attribué, le dispositif de commande (154) est en outre configuré pour stocker des informations indiquant l'anomalie du véhicule avec le dossier de l'utilisateur attribué.
